# FASCICULE DE BREVET EUROPEEN

(11) **EP 1 882 826 B1**
(45) Date de publication et mention de la délivrance du brevet: **01.08.2012**
(21) Numéro de dépôt: 07290824.7
(22) Date de dépôt: 29.06.2007
(51) Int. Cl.: F01D 25/12, F01D 5/08, F01D 5/04

(54) **Système de ventilation d'une cavité aval de rouet de compresseur centrifuge**
System zur Lüftung eines Hohlraums stromabwärts eines Zentrifugalverdichterrads
Ventilation system for an downstream cavity of a centrifugal compressor impeller

(30) Priorité: 19.07.2006 FR 0606541
(43) Date de publication de la demande: 30.01.2008
(73) Titulaire: SNECMA, 75015 Paris (FR)
(72) Inventeur: Argaud, Thierry, 77590 Chartrettes (FR); Brunet, Antoine, Robert, Alain, 77550 Moissy Cramayel (FR); Leininger, Jean-Christophe, 75017 Paris (FR)
(74) Mandataire: Ramey, Daniel

(56) Documents cités:
- EP-A1- 0 961 033
- DE-A1- 4 225 625
- DE-A1- 10 325 980
- DE-C- 968 742
- US-A- 5 996 331
- US-A1- 2001 047 651
- US-B1- 6 276 896

## Description

La présente invention concerne un système de ventilation d'une cavité aval de rouet de compresseur centrifuge dans une turbomachine telle notamment qu'un turboréacteur, un turbopropulseur d'avion ou un générateur de gaz.

La cavité annulaire qui est formée en aval du rotor ou rouet d'un compresseur centrifuge dans une turbomachine doit être ventilée pour évacuer l'énergie thermique générée par le rouet. Cette ventilation se fait en général par prélèvement d'air en sortie du compresseur, à la jonction avec l'entrée d'un diffuseur annulaire qui alimente une chambre de combustion (voir par exemple le document DE-A-42 25 625).

Cet air de ventilation qui a déjà une température relativement élevée, s'échauffe par frottement visqueux sur la face aval du rouet en s'écoulant de l'extérieur vers l'intérieur dans la cavité aval du rouet, l'air devenant de plus en plus chaud à mesure qu'il se rapproche de l'axe de rotation du rouet. Cet air chaud peut par convection élever la température du rouet, et notamment sa partie radialement interne où les contraintes mécaniques sont les plus importantes en fonctionnement, ce qui se traduit par un risque de détérioration du rouet par fluage de matière.

On a proposé de monter sur la face aval du rouet un bouclier annulaire de protection thermique. Cependant, la fixation de ce bouclier sur le rouet est complexe et entraîne une augmentation de la masse et de l'inertie en rotation du rouet du compresseur, ce qui peut diminuer les performances de la turbomachine.

L'invention a notamment pour but d'apporter une solution simple, efficace et économique à ces problèmes.

Elle propose à cet effet un système de ventilation d'une cavité aval de rouet de compresseur centrifuge dans une turbomachine, le système de ventilation comprenant une cavité aval délimitée par une face aval du rouet et par un flasque annulaire aval d'un diffuseur annulaire agencé à la sortie du compresseur et ventilée par prélèvement d'air en sortie du compresseur centrifuge, caractérisé en ce quel e système de ventilation comprend des moyens de déviation montés fixement dans la cavité aval du rouet pour dévier de l'air de ventilation depuis la partie aval de la cavité aval et le faire circuler radialement de l'intérieur vers l'extérieur le long de la face aval du rouet, l'air de ventilation dévié étant de l'air prélevé en sortie du rouet du compresseur, de l'air sortant du diffuseur annulaire et circulant à l'extérieur du flasque annulaire aval ou de l'air prélevé sur un circuit d'injection d'air de ventilation..

L'invention permet de faire circuler le long de la face aval du rouet de l'air de ventilation radialement de l'intérieur vers l'extérieur, c'est-à-dire selon une direction centrifuge par rapport à l'axe de rotation du rouet et non pas centripète comme dans la technique antérieure. Cet air de ventilation est relativement frais au niveau de la partie radialement interne du rouet et s'échauffe en s'écoulant de l'intérieur vers l'extérieur le long de la face aval du rouet. L'air plus chaud circule au niveau de la partie radialement externe du rouet qui est moins sollicitée mécaniquement et moins sensible à cet air chaud, ce qui permet d'augmenter la durée de vie du rouet.

Selon une autre caractéristique de l'invention, les moyens de déviation comprennent une tôle annulaire montée fixement dans la cavité aval du rouet sur des moyens de fixation de l'extrémité aval du flasque annulaire du diffuseur, cette tôle s'étendant vers l'amont depuis ces moyens de fixation le long de la face aval du rouet et se terminant au voisinage des moyens de prélèvement d'air en sortie du compresseur. Cette tôle annulaire forme avec la face aval du rouet un premier passage annulaire d'air de ventilation.

Dans un premier mode de réalisation de l'invention, les moyens de déviation comprennent une seconde tôle annulaire montée fixement sur des moyens de fixation de l'extrémité aval du flasque annulaire du diffuseur, cette seconde tôle s'étendant vers l'amont depuis ces moyens de fixation sensiblement parallèlement au flasque annulaire du diffuseur et se terminant au voisinage des moyens de prélèvement d'air en sortie du compresseur. Cette seconde tôle annulaire délimite avec le flasque du diffuseur un second passage annulaire d'air de ventilation qui communique avec le passage annulaire formé par la première tôle annulaire.

L'extrémité amont de la seconde tôle annulaire est située radialement à l'extérieur de l'extrémité amont de la première tôle annulaire. Avantageusement, la face aval du rouet porte un élément annulaire de déviation de flux qui s'étend en saillie dans la cavité aval entre les extrémités amont des deux tôles annulaires.

La seconde tôle annulaire peut être montée fixement à l'intérieur de la cavité aval du rouet pour former avec le flasque annulaire du diffuseur un passage annulaire qui est alimenté en air prélevé à la sortie du compresseur.

En variante, la seconde tôle annulaire est montée fixement à l'extérieur de la cavité aval du rouet pour former avec le flasque annulaire du diffuseur un passage annulaire qui est alimenté par de l'air sortant du diffuseur.

Dans une autre variante de réalisation de l'invention, la première tôle annulaire définit avec la face aval du rouet un passage annulaire alimenté à son extrémité aval par de l'air prélevé sur un circuit d'injection d'air de ventilation.

Le système peut comprendre des moyens d'injection d'air de ventilation sur la face aval du rouet, le flux d'air sortant de ces moyens d'injection étant orienté dans le sens de rotation du rouet, les moyens d'injection étant portés par la seconde tôle annulaire et/ou par le flasque annulaire du diffuseur.

L'invention concerne encore une turbomachine, telle qu'un turboréacteur ou un turbopropulseur d'avion, caractérisée en ce qu'elle comprend un système de ventilation tel que décrit ci-dessus.

L'invention sera mieux comprise et d'autres détails, caractéristiques et avantages de la présente invention apparaîtront à la lecture de la description suivante faite à titre d'exemple non limitatif et en référence aux dessins annexés, dans lesquels :
- la figure 1 est une demi-vue schématique en coupe axiale d'un système de ventilation de cavité aval de rouet de compresseur selon la technique antérieure ;
- la figure 2 est une vue schématique partielle en coupe axiale d'un système de ventilation de cavité aval de rouet de compresseur selon l'invention ;
- les figures 3 à 9 sont des vues correspondants à la figure 2 et représentent des variantes de réalisation du système selon l'invention.

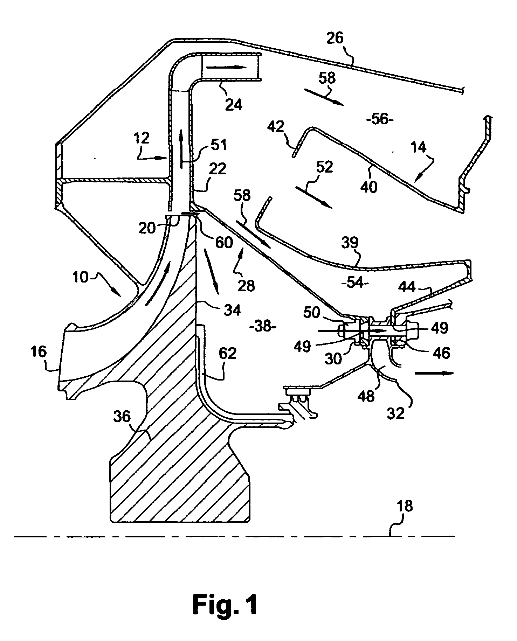

On se réfère d'abord à la figure 1 qui représente une partie d'une turbomachine, telle qu'un turboréacteur ou un turbopropulseur d'avion, comportant d'amont en aval, dans le sens de l'écoulement des gaz à l'intérieur de la turbomachine, un étage centrifuge de compresseur 10, un diffuseur annulaire 12 et une chambre de combustion 14.

L'entrée 16 de l'étage centrifuge 10 est orientée vers l'amont, sensiblement parallèlement à l'axe 18 de la turbomachine, et sa sortie 20 est orientée vers l'extérieur, sensiblement perpendiculairement à l'axe 18, et est alignée avec une entrée radiale 22 du diffuseur 12. Ce diffuseur est de forme annulaire coudée sensiblement à 90° et comprend une sortie annulaire 24 qui est orientée parallèlement à l'axe de la turbomachine et qui débouche dans une enceinte annulaire dans laquelle est montée la chambre de combustion 14.

Le diffuseur 12 est supporté par un carter externe 26 de la turbomachine qui entoure extérieurement le compresseur 10, le diffuseur 12 et la chambre de combustion 14.

Le diffuseur 12 comporte un flasque annulaire aval 28 sensiblement tronconique qui s'étend vers l'aval et vers l'intérieur depuis l'entrée 22 du diffuseur, et se termine à son extrémité aval par une bride annulaire 30 de fixation sur un circuit 32 d'injection d'air de ventilation, notamment d'une turbine (non représentée) située en aval de la chambre de combustion 14.

Le flasque 28 du diffuseur délimite avec une face aval 34 du rotor ou rouet 36 de l'étage centrifuge 10 une cavité annulaire 38 qui communique à son extrémité radialement externe avec la sortie 20 du compresseur. La face aval 34 du rouet comprend une surface annulaire radiale qui est orientée vers l'aval et reliée à son extrémité radialement interne à une surface cylindrique s'étendant vers l'aval.

La chambre de combustion 14 comporte deux parois de révolution coaxiales 39, 40 s'étendant l'une à l'intérieur de l'autre et reliées à leurs extrémités amont à une paroi 42 de fond de chambre. La paroi radialement externe 40 de la chambre est fixée à son extrémité aval au carter externe 26, et sa paroi radialement interne 39 est reliée à son extrémité aval à une virole tronconique 44 qui comporte à son extrémité radialement interne une bride annulaire interne 46 de fixation sur le circuit 32 précités.

Ce circuit 32 comporte un canal annulaire 48 à section sensiblement en L qui débouche à son extrémité amont radialement vers l'extérieur, en aval de la bride 30 du flasque 28 du diffuseur et en amont de la bride 46 de la virole 44, et à son extrémité aval axialement vers l'aval. Des orifices 49 sont formés sur les brides 30 et 46 du flasque 28 et de la virole 44, respectivement, pour le passage de moyens 50 de fixation du type vis-écrou qui s'étendent à travers des orifices correspondants du circuit 32.

La majeure partie du débit d'air sortant du compresseur 10 passe dans le diffuseur 12 (flèche 51) et alimente la chambre de combustion 14 (flèche 52) et des veines annulaires interne 54 et externe 56 de contournement de la chambre de combustion 14 (flèches 58). La veine externe 56 est formée entre le carter externe 26 et la paroi externe 40 de la chambre, et la veine interne 54 est formée entre le flasque 28 du diffuseur et la paroi interne 39 de la chambre. L'air qui passe dans la veine interne 54 alimente entre autres le circuit 32 d'injection d'air.

Une petite partie du débit d'air sortant du compresseur centrifuge 10 pénètre dans la cavité aval 38 du rouet (flèche 60) pour assurer sa ventilation. L'air 60 s'écoule de manière centripète par rapport à l'axe de rotation du rouet, c'est-à-dire de l'extérieur vers l'intérieur, le long de la face aval 34 du rouet et s'échauffe par frottement visqueux sur cette face, l'air devenant de plus en plus chaud à mesure qu'il se rapproche de l'axe 18 de rotation du rouet.

Dans la technique antérieure, la partie radialement interne du rouet 36 qui est très sollicitée mécaniquement, est protégée de cet air chaud par un bouclier annulaire 62 qui est monté en aval du rouet et recouvre la partie radialement interne de la face aval 34 du rouet. Cependant, ce bouclier présente de nombreux inconvénients cités précédemment.

Le système de ventilation selon l'invention permet de supprimer ce bouclier 62 grâce à des moyens de déviation de flux montés fixement dans la cavité 38 notamment pour faire circuler de l'air de ventilation le long de la face aval du rouet de manière centrifuge par rapport à l'axe du rouet, c'est-à-dire radialement de l'intérieur vers l'extérieur. Ainsi, de l'air de ventilation relativement frais circule au niveau de la partie radialement interne du rouet et de l'air plus chaud, qui s'est échauffé par frottement visqueux sur la face aval du rouet, circule au niveau de la partie radialement externe du rouet.

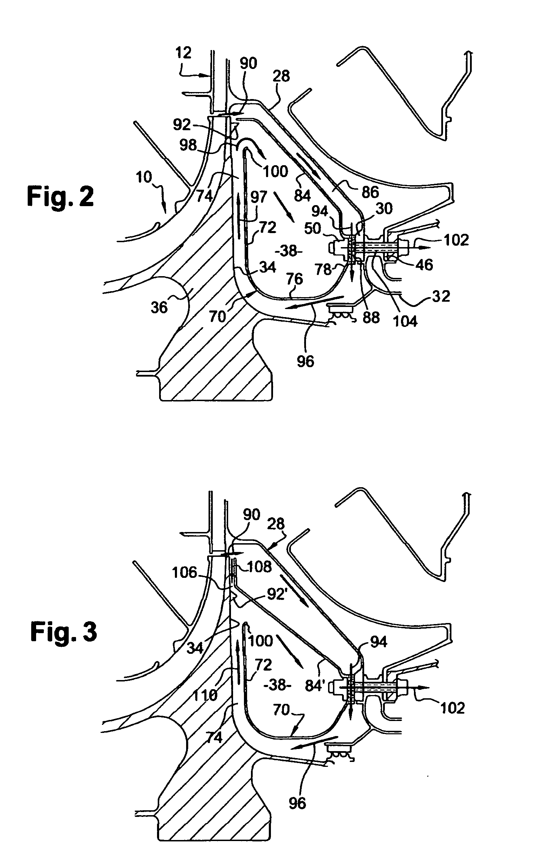

Dans le mode de réalisation de la figure 2, les moyens de guidage comprennent deux tôles annulaires 70, 84 montées fixement dans la cavité aval 38 du rouet pour guider l'air de ventilation prélevé en sortie du compresseur radialement de l'intérieur vers l'extérieur le long de la face aval 34 du rouet.

Une première tôle annulaire 70 de déviation a une forme en L ou en U en section axiale et s'étend le long de la face aval 34 du rouet pour former un passage annulaire 74 d'écoulement d'air qui est coudé sensiblement à angle droit, l'extrémité radialement externe du passage 74 débouchant vers l'extérieur au voisinage de la sortie 20 du compresseur, et son extrémité aval s'étendant axialement vers l'aval jusqu'au niveau du circuit 32 d'injection d'air.

La tôle 70 comprend une partie amont 72 sensiblement radiale qui s'étend en aval et le long de la surface radiale aval du rouet, et une partie aval 76 sensiblement cylindrique qui s'étend vers l'aval depuis l'extrémité radialement interne de la partie amont 72, autour et à distance de la surface cylindrique de la face aval 34 du rouet. Cette partie aval 76 se termine à son extrémité aval par une bride annulaire externe 78 fixée par les moyens 50 à la bride 30 du flasque du diffuseur et au circuit 32.

Une seconde tôle annulaire 84 de déviation est montée dans la cavité aval 38 du rouet, à l'intérieur du flasque 28 du diffuseur et à l'extérieur de la première tôle 70. Cette seconde tôle 84 est sensiblement tronconique et s'étend depuis son extrémité aval reliée à la bride 78 de la première tôle 70, vers l'amont et vers l'extérieur, jusqu'au voisinage de la sortie 20 du compresseur. L'extrémité amont de la tôle 84 est sensiblement cylindrique et située radialement au niveau de la sortie 20 du compresseur, et le reste de la tôle 84 s'étend sensiblement parallèlement au flasque 28 du diffuseur pour former un passage 86 dans lequel circule de l'air prélevé en sortie du compresseur. L'extrémité aval de ce passage 86, située au niveau des brides 30, 78 de fixation du flasque et de la première tôle 70, respectivement, communique avec l'extrémité aval du passage 74 par l'intermédiaire d'orifices 88 sensiblement radiaux formés dans la bride 78 de la première tôle 70 ou dans la bride 30 du flasque 28. Ces orifices sont régulièrement répartis autour de l'axe de la turbomachine et sont formés entre les moyens de fixation 50.

L'air 90 prélevé en sortie du compresseur est empêché de passer directement à l'intérieur de la tôle 84 au moyen d'un faible jeu axial entre la face aval 34 du rouet et l'extrémité amont de la tôle 84, et d'un élément annulaire 92 de déviation de flux formé en saillie sur la face aval 34 du rouet et situé radialement à l'intérieur de l'extrémité amont de la seconde tôle 84 et à faible distance radiale de celle-ci. Une variante consiste à se passer de cet élément annulaire.

L'air 90 s'écoule d'amont en aval vers l'intérieur dans le passage 86 délimité par le flasque 28 du diffuseur et la seconde tôle 84, puis pénètre dans le passage 74 à travers les orifices 88 de la bride 78 de la première tôle 70 (flèches 94). L'air 96 circule dans le passage 74 d'aval en amont le long de la partie cylindrique 76 de la première tôle 70 puis radialement de l'intérieur vers l'extérieur le long de la partie radiale 72 de la tôle 70. Cet air qui s'échauffe sur la face aval 34 du rouet est dévié vers l'aval par l'élément 92 (flèche 98) dans la chambre annulaire formée entre les tôles de déviation 70 et 84. L'extrémité radialement externe 100 de la première tôle 70 est recourbée vers l'aval et vers l'intérieur pour limiter les turbulences lors du passage de l'air 98 entre les deux tôles 70, 84. Une variante consiste à ne pas recourber cette tôle.

L'air chaud est évacué (flèche 102) vers l'aval à travers des orifices axiaux 104 de passage d'air prévus dans les brides 30, 78, 46 et le circuit 32, entre les moyens de fixation 50 et les orifices radiaux 88 précités.

Dans la variante représentée en figure 3, la seconde tôle 84' de déviation diffère de celle de la figure 2 en ce que son extrémité amont est sensiblement radiale et s'étend en aval et le long d'une partie radialement externe de la face aval du rouet 36 pour former un espace annulaire radial 106 de faible dimension axiale. L'extrémité radialement externe de la tôle 84' est située radialement au niveau de la sortie 20 du compresseur de manière à ce qu'une partie de l'air prélevé en sortie du compresseur s'écoule de l'extérieur vers l'intérieur dans l'espace radial 106 (flèche 108).

Un élément annulaire 92' de déviation de flux est formé en saillie sur la face aval 34 du rouet entre les extrémités amont des deux tôles 84' et 70. L'air 108 qui sort de l'espace radial 106 est dévié vers l'aval par cet élément 92' dans la chambre annulaire délimitée par les tôles 70, 84'. L'air 110 qui sort du passage 74 formé entre le rouet et la première tôle 70 est également dévié vers l'aval par l'élément 92' et se mélange dans la chambre à l'air sortant de l'espace radial 106.

Le système de ventilation de la figure 3 permet de faire circuler de l'air relativement frais le long des parties radialement interne et externe du rouet et de dévier cet air vers l'aval lorsqu'il s'est échauffé sur la face aval 34 du rouet.

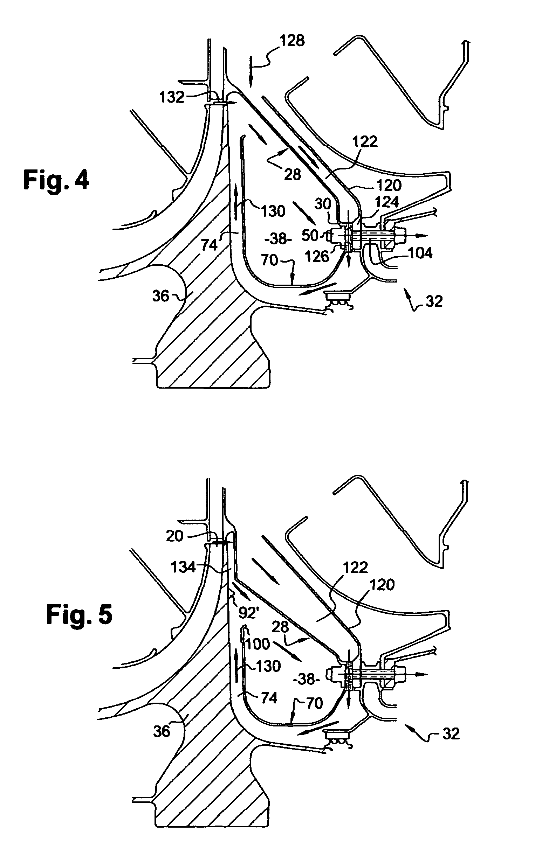

Dans la variante de la figure 4, les moyens de déviation comprennent une première tôle 70, sensiblement identique à celle de la figure 2, qui forme avec le rouet un passage annulaire 74 dans lequel circule, radialement de l'intérieur vers l'extérieur, de l'air provenant du diffuseur 12, l'air sortant de ce passage 74 étant ensuite mélangé à de l'air prélevé en sortie du compresseur.

Les moyens de déviation comprennent une seconde tôle 120 de forme tronconique qui est montée autour du flasque 28 du diffuseur, à faible distance de celui-ci, pour former un second passage 122 d'écoulement d'air qui débouche à son extrémité amont dans la veine annulaire interne 54 de contournement de la chambre de combustion 14. La seconde tôle 120 se termine à son extrémité aval par une bride annulaire interne 124 fixée par les moyens 50 précités au circuit 32, cette bride 124 étant serrée axialement entre la bride 30 du flasque du diffuseur et le circuit 32. Une variante consiste à supprimer cette tôle 120. La bride 124 est alors soit conservée, soit intégrée à la bride 30.

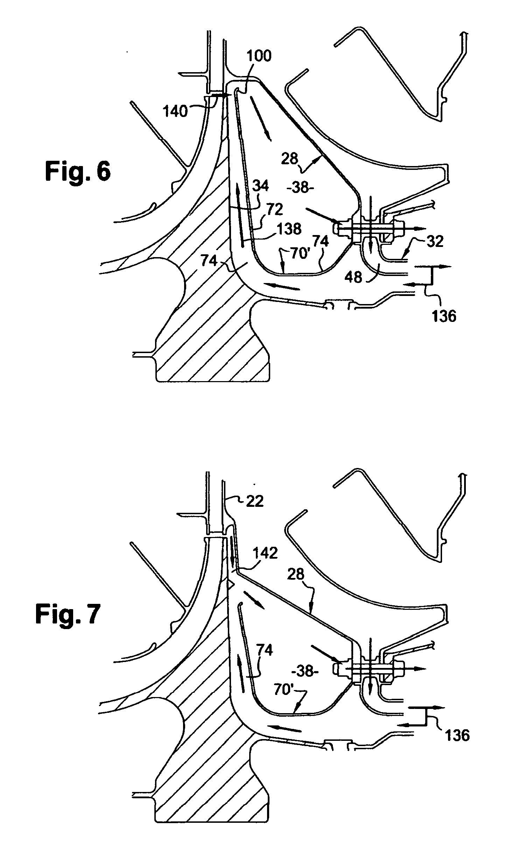

L'extrémité aval du passage 122 formé par la seconde tôle 120 communique avec l'extrémité aval du passage 74 délimité par la première tôle 70 par l'intermédiaire d'orifices 126 de passage d'air formés dans la bride 30 du flasque du diffuseur, ces orifices 126 étant régulièrement répartis autour de l'axe de la turbomachine, entre les moyens de fixation 50. L'extrémité aval de la première tôle 70 est fixée par soudure à la bride 30 du flasque. L'extrémité amont de la première tôle 70 se situe à un rayon inférieur à celui de la sortie du compresseur. Une variante peut être d'avoir l'extrémité amont de la tôle 70 à un rayon au moins égal à celui de la sortie du compresseur (voir par exemple sur la figure 6 où l'extrémité amont de la tôle 70 a un rayon supérieur à celui de la sortie du compresseur).

Une partie de l'air sortant du diffuseur 12 et passant dans la veine interne 54 s'engouffre (flèche 128) dans le second passage 122 formé par la seconde tôle 120 et le flasque 28 du diffuseur puis pénètre dans le premier passage 74 à travers les orifices 126. L'air 130 qui remonte le long de la face aval du rouet s'échauffe et est mélangé en sortie du passage 74 à de l'air prélevé en sortie du compresseur (flèche 132). Ce mélange d'air pénètre dans la chambre annulaire délimitée par la première tôle 70 et le flasque 28 du diffuseur puis est évacué par les orifices 104 des brides 30, 124, 46 et du circuit 32.

En variante et comme représenté en figure 5, le flasque 28 du diffuseur comprend une partie amont sensiblement radiale qui s'étend depuis l'entrée 22 du diffuseur en aval et le long d'une partie radialement externe du rouet pour former un espace annulaire radial 134 communiquant à son extrémité radialement externe avec la sortie 20 du compresseur.

Un élément annulaire 92' de déviation de flux est formé en saillie sur la face aval du rouet entre les extrémités amont du flasque 28 et de la première tôle 70. L'air qui sort de l'espace radial 134 est dévié vers l'aval par cet élément 92' et se mélange dans la chambre à l'air 130 qui sort du passage 74 et qui est dévié vers l'aval par l'élément 92'.

La seconde tôle 120 est identique à celle de la figure 4.

Le système de ventilation de la figure 5 permet également de faire circuler de l'air relativement frais le long des parties radialement interne et externe du rouet.

Dans la variante représentée en figure 6, les moyens de déviation ne comprennent qu'un seule tôle annulaire 70' qui forme avec la face aval du rouet un passage annulaire 74 alimenté par de l'air prélevé en sortie du circuit 32 d'injection d'air, l'air sortant de ce passage radial 74 étant destiné à se mélanger à de l'air prélevé en sortie du compresseur.

Une fraction du débit d'air sortant du circuit 32 est prélevée (flèche 136) par des moyens appropriés et circule d'aval en amont dans le passage 74 le long de la partie cylindrique de la tôle 70' et radialement de l'intérieur vers l'extérieur le long de la partie radiale de la tôle 70'. Dans l'exemple représenté, la tôle 70' s'étend approximativement le long de l'intégralité de la face aval du rouet et son extrémité radialement externe 100 est située radialement au niveau de l'entrée du diffuseur 12. L'air 138 qui remonte dans le passage 74 s'échauffe sur la face aval du rouet puis est mélangé à l'air 140 prélevé en sortie du compresseur. Ce mélange d'air passe entre l'extrémité radialement externe 100 de la tôle et le flasque du diffuseur et est ensuite évacué à travers les orifices 104 de la bride 30 du flasque 28 et du circuit 32. L'extrémité aval de la tôle est reliée par soudure à la bride 30 du flasque.

Une variante consiste à prélever de l'air directement dans le circuit 32 à travers des orifices formés dans le circuit et débouchants à une de leurs extrémités dans le canal annulaire 48 du circuit et à l'autre de leurs extrémités dans l'extrémité aval du passage annulaire 74.

Dans la variante de la figure 7, et comme décrit en référence à la figure 5, le flasque 28 du diffuseur comprend une partie amont radiale qui s'étend depuis l'entrée 22 du diffuseur en aval et le long d'une partie radialement externe du rouet pour former un espace annulaire radial 142 communiquant à son extrémité radialement externe avec la sortie du compresseur. On est ramené, pour le fonctionnement de ce système de ventilation, au cas de la figure 5.

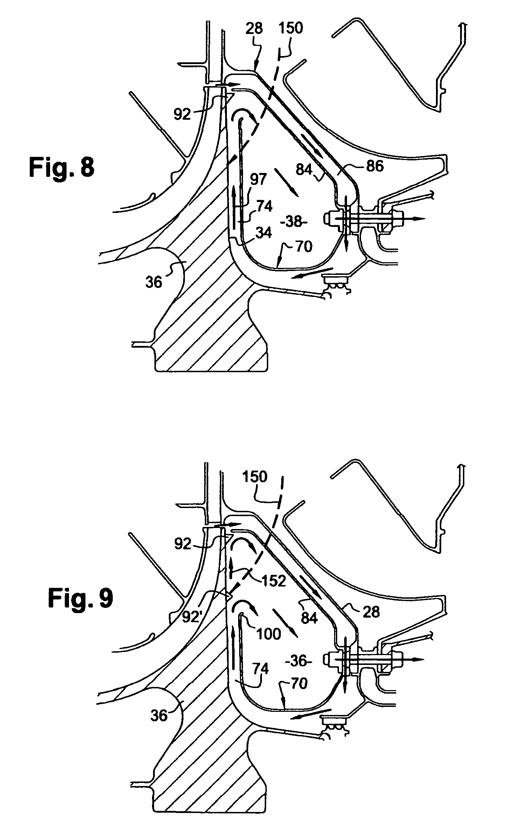

Les variantes des figures 8 et 9 diffèrent des modes de réalisation des figures 2 et 3 en ce qu'elles comprennent des moyens d'injection d'air de ventilation (schématiquement représentés par les traits en pointillés 150) sur la face aval du rouet, cet air étant injecté dans le sens de rotation du rouet de manière à minimiser la température totale relative de cet air vue par le rouet.

En figure 8, la sortie des moyens d'injection débouche sur la face aval 34 du rouet, dans le passage 74 défini par la première tôle 70. L'air injecté se mélange à l'air 97 s'écoulant radialement de l'intérieur vers l'extérieur le long de la face aval du rouet, ce mélange d'air étant ensuite dévié vers l'aval par l'élément annulaire 92 formé en saillie à l'extrémité radialement externe du rouet.

En figure 9, un second élément annulaire 92' de déviation de flux est formé en saillie sur la face aval du rouet, radialement à l'extérieur de l'extrémité radialement externe 100 de la première tôle 70 pour dévier vers l'aval l'air sortant du passage 74. La sortie des moyens d'injection 150 est située radialement à l'extérieur de cet élément 92' pour que l'air 152 injecté circule de l'intérieur vers l'extérieur le long de la face aval du rouet et soit dévié vers l'aval à l'extrémité radialement externe du rouet par le premier élément 92. Cet air 152 se mélange ensuite à l'air sortant du passage 74 dans la chambre annulaire délimitée par les tôles annulaires 70, 84.

Les moyens d'injection 150 sont fixés par des moyens appropriés sur la seconde tôle annulaire 84 et/ou sur le flasque annulaire 28 du diffuseur.

Ce système permet également de diminuer la température de l'air de ventilation de la cavité aval du rouet et d'éviter que de l'air trop chaud ne circule le long de la face aval du rouet.

Ces moyens d'injection 150 pourraient également être combinés aux systèmes de ventilation des figures 4 à 7.

## Revendications

1. Système de ventilation d'une cavité aval de rouet de compresseur centrifuge dans une turbomachine, le système de ventilation comprenant une cavité aval (38) délimitée par une face aval (34) du rouet (36) et par un flasque annulaire aval (28) d'un diffuseur annulaire (12) agencé à la sortie du compresseur et ventilée par prélèvement d'air en sortie du compresseur centrifuge (10), **caractérisé en ce que** le système de ventilation comprend des moyens de déviation (70, 84) montés fixement dans la cavité aval (38) du rouet pour dévier de l'air de ventilation depuis la partie aval de la cavité aval (38) et le faire circuler radialement de l'intérieur vers l'extérieur le long de la face aval (34) du rouet (36), l'air de ventilation dévié étant de l'air prélevé en sortie du rouet (36) du compresseur, de l'air sortant du diffuseur annulaire (12) et circulant à l'extérieur du flasque annulaire aval (28) ou de l'air prélevé sur un circuit (32) d'injection d'air de ventilation.

2. Système selon la revendication 1, **caractérisé en ce que** les moyens de déviation comprennent une tôle annulaire (70) montée fixement dans la cavité aval (38) du rouet sur des moyens de fixation de l'extrémité aval du flasque annulaire (28) du diffuseur, cette tôle s'étendant vers l'amont depuis ces moyens de fixation le long de la face aval (34) du rouet et se terminant au voisinage des moyens de prélèvement d'air en sortie du compresseur (10).

3. Système selon la revendication 2, **caractérisé en ce que** les moyens de déviation comprennent une seconde tôle annulaire (84, 120) montée fixement sur des moyens de fixation de l'extrémité aval du flasque annulaire (28) du diffuseur, cette seconde tôle s'étendant vers l'amont depuis ces moyens de fixation sensiblement parallèlement au flasque annulaire du diffuseur et se terminant au voisinage des moyens de prélèvement d'air en sortie du compresseur (10).

4. Système selon la revendication 3, **caractérisé en ce que** l'extrémité amont de la seconde tôle annulaire (84, 120) est située radialement à l'extérieur de l'extrémité amont de la première tôle annulaire (70).

5. Système selon la revendication 4, **caractérisé en ce que** la face aval (34) du rouet porte un élément annulaire de déviation de flux qui s'étend en saillie dans la cavité aval (38) entre les extrémités amont des deux tôles annulaires (70, 84).

6. Système selon l'une des revendications 3 à 5, **caractérisé en ce que** la première tôle annulaire (70) forme avec la face aval (34) du rouet un passage annulaire (74) d'air de ventilation, qui communique à son extrémité aval avec un passage annulaire (86, 122) d'air de ventilation formé entre la seconde tôle annulaire (84, 120) et le flasque (28) du diffuseur.

7. Système selon la revendication 6, **caractérisé en ce que** la seconde tôle annulaire (84) est à l'intérieur de la cavité aval (38) et le passage annulaire (86) qu'elle forme avec le flasque annulaire (28) du diffuseur est alimenté en air prélevé à la sortie du compresseur.

8. Système selon la revendication 6, **caractérisé en ce que** la seconde tôle annulaire (120) est à l'extérieur de la cavité aval (38) et le passage annulaire (122) qu'elle forme avec le flasque annulaire (28) du diffuseur est alimenté par de l'air sortant du diffuseur.

9. Système selon la revendication 2, **caractérisé en ce que** la tôle annulaire (70) définit avec la face aval (34) du rouet un passage annulaire (74) alimenté à son extrémité aval par de l'air prélevé sur le circuit (32) d'injection d'air de ventilation.

10. Système selon l'une des revendications 3 à 9, **caractérisé en ce qu'**il comprend des moyens (150) d'injection d'air de ventilation sur la face aval (34) du rouet, le flux d'air sortant de ces moyens d'injection étant orienté dans le sens de rotation du rouet, les moyens d'injection étant portés par la seconde tôle annulaire (84) et/ou par le flasque annulaire (28) du diffuseur.

11. Turbomachine, **caractérisée en ce qu'**elle comprend un système de ventilation selon l'une des revendications précédentes.

## Claims

1. A system for ventilating a downstream cavity of an impellor of a centrifugal compressor in a turbomachine, the ventilating system comprising a downstream cavity (38) delimited by a downstream face (34) of the impellor (36) and by an annular downstream end-piece (28) of an annular diffuser (12) arranged at the output of the compressor and ventilated by taking air from the outlet of the centrifugal compressor (10), **characterized in that** the ventilating system comprises diversion means (70, 84) mounted fixedly in the downstream cavity (38) of the impellor in order to divert the ventilation air from the downstream portion of the downstream cavity (38) and cause it to flow radially from the inside to the outside along the downstream face (34) of the impellor (36), the diverted ventilating air being air taken from the exit of the impellor (36) of the compressor, air exiting from the annular diffuser (12) and flowing outside the annular downstream eand-piece (28) or air taken from a ventilating air injection circuit (32).

2. The system as claimed in claim 1, **characterized in that** the diversion means comprise an annular metal sheet (70) mounted fixedly in the downstream cavity (38) of the impellor on means of attaching the downstream end of the annular end-piece (28) of the diffuser, this metal sheet extending upstream from these attachment means along the downstream face (34) of the impellor and terminating in the vicinity of the means for taking air from the outlet of the compressor (10).

3. The system as claimed in claim 2, **characterized in that** the diversion means include a second annular metal sheet (84, 120) mounted fixedly on means for attaching the downstream end of the annular end-piece (28) of the diffuser, this second metal sheet extending upstream from these attachment means substantially parallel to the annular end-piece of the diffuser and terminating in the vicinity of the means for taking air from the outlet of the compressor (10).

4. The system as claimed in claim 3, **characterized in that** the upstream end of the second annular metal sheet (84, 120) is situated radially outside the upstream end of the first annular metal sheet (70).

5. The system as claimed in claim 4, **characterized in that** the downstream face (34) of the impellor supports an annular flow diversion element that extends as a protrusion into the downstream cavity (38) between the upstream ends of the two annular metal sheets (70, 84).

6. The system as claimed in one of claims 3 to 5, **characterized in that** the first annular metal sheet (70) forms, with the downstream face (34) of the impellor, an annular ventilation air passageway (74) that communicates at its downstream end with an annular ventilation air passageway (86, 122) formed between the second annular metal sheet (84, 120) and the end-piece of the diffuser.

7. The system as claimed in claim 6, **characterized in that** the second annular metal sheet (84) is inside the downstream cavity (38) and the annular passageway (86) that it forms with the annular end-piece (28) of the diffuser is supplied with air taken from the outlet of the compressor.

8. The system as claimed in claim 6, **characterized in that** the second annular metal sheet (120) is outside the downstream cavity (38) and annular passageway (122) that it forms with the annular end-piece (28) of the diffuser is supplied with air coming out of the diffuser.

9. The system as claimed in claim 2, **characterized in that** the annular metal sheet (70) defines, with the downstream face (34) of the impellor, an annular passageway (74) supplied at its downstream end with air taken from the ventilation air injection circuit (32).

10. The system as claimed in one of claims 3 to 9, which comprises means (150) for injecting ventilation air onto the downstream face (34) of the impellor, the flow of air coming out of these injection means being oriented in the direction of rotation of the impellor, the injection means being supported by the second annular metal sheet (84) and/or by the annular end-piece (28) of the diffuser.

11. A turbomachine which comprises a ventilation system as claimed in one of the preceding claims.

## Patentansprüche

1. Einrichtung zum Belüften des stromabwärtigen bzw. hinteren Hohlraums des Laufrads eines Radialverdichters in einer Turbomaschine, wobei die Belüftungseinrichtung einen stromabwärtigen bzw. hinteren Hohlraum (38) aufweist, der von einer Hinterseite (34) des Laufrads (36) und von einem hinteren, ringförmigen Flansch (28) eines ringförmigen Diffusors (12) begrenzt wird, der am Austritt des Verdichters angeordnet ist, und durch Luftentnahme am Austritt des Radialverdichters (10) belüftet wird, **dadurch gekennzeichnet, dass** die Belüftungseinrichtung Umleitmittel (70, 84) aufweist, die fest in dem hinteren Hohlraum (38) des Laufrads montiert sind, um die Ventilationsluft von dem hinteren Abschnitt des hinteren Hohlraums (38) umzuleiten und sie radial von innen nach außen entlang der Hinterseite (34) des Laufrads (36) strömen zu lassen, wobei die umgeleitete Ventilationsluft Luft ist, die am Austritt des Laufrads (36) des Verdichters entnommen wird, oder Luft, die aus dem ringförmigen Diffusor (12) austritt und außerhalb des hinteren, ringförmigen Flansches (28) strömt, oder aber Luft, die von einem Kreislauf (32) zum Einblasen von Ventilationsluft entnommen wird.

2. Einrichtung nach Anspruch 1, **dadurch gekennzeichnet, dass** die Umleitmittel ein ringförmiges Blech (70) aufweisen, das fest in dem hinteren Hohlraum (38) des Laufrads an Befestigungsmitteln für das hintere Ende des ringförmigen Flansches (28) des Diffusors montiert ist, wobei sich dieses Blech von diesen Befestigungsmitteln ausgehend entlang der Hinterseite (34) des Laufrads nach stromaufwärts bzw.
vorne erstreckt und benachbart zu den Luftentnahmemitteln am Austritt des Verdichters (10) endet.

3. Einrichtung nach Anspruch 2, **dadurch gekennzeichnet, dass** die Umleitmittel ein zweites ringförmiges Blech (84, 120) aufweisen, das an Befestigungsmitteln für das hintere Ende des ringförmigen Flansches (28) des Diffusors montiert ist, wobei dieses zweite Blech sich ausgehend von diesen Befestigungsmitteln im wesentlichen parallel zum ringförmigen Flansch des Diffusors nach vorne erstreckt und benachbart zu den Luftentnahmemitteln am Austritt des Verdichters (10) endet.

4. Einrichtung nach Anspruch 3, **dadurch gekennzeichnet, dass** das vordere Ende des zweiten ringförmigen Blechs (84, 120) radial außerhalb des vorderen Endes des ersten ringförmigen Blechs (70) liegt.

5. Einrichtung nach Anspruch 4, **dadurch gekennzeichnet, dass** die Hinterseite (34) des Laufrads ein ringförmiges Umleitteil zum Umleiten der Strömung trägt, das sich in den hinteren Hohlraum (38) zwischen den vorderen Enden der beiden ringförmigen Bleche (70, 84) vorspringend erstreckt.

6. Einrichtung nach einem der Ansprüche 3 bis 5, **dadurch gekennzeichnet, dass** das erste ringförmige Blech (70) mit der Hinterseite (34) des Laufrads einen ringförmigen Durchtritt (74) für die Ventilationsluft bildet, der an seinem hinteren Ende mit einem ringförmigen Durchtritt (86, 122) für Ventilationsluft kommuniziert, der zwischen dem zweiten ringförmigen Blech (84, 120) und dem Flansch (28) des Diffusors gebildet ist.

7. Einrichtung nach Anspruch 6, **dadurch gekennzeichnet, dass** das zweite ringförmige Blech (84) innerhalb des hinteren Hohlraums (38) liegt und der ringförmige Durchtritt (86), den es mit dem ringförmigen Flansch (28) des Diffusors bildet, mit am Austritt des Verdichters entnommener Luft gespeist wird.

8. Einrichtung nach Anspruch 6, **dadurch gekennzeichnet, dass** das zweite ringförmige Blech (120) außerhalb des hinteren Hohlraums (38) liegt und der ringförmige Durchtritt (122), den es mit dem ringförmigen Flansch (28) des Diffusors bildet, mit vom Diffusor ausströmender Luft gespeist wird.

9. Einrichtung nach Anspruch 2, **dadurch gekennzeichnet, dass** das ringförmige Blech (70) mit der Hinterseite (34) des Laufrads einen ringförmigen Durchtritt (74) definiert, der an seinem hinteren Ende mit von dem Ventilationslufteinblaskreis (32) entnommener Luft gespeist wird.

10. Einrichtung nach einem der Ansprüche 3 bis 9, **dadurch gekennzeichnet, dass** es Mittel (150) zum Einblasen von Ventilationsluft an der Hinterseite (34) des Laufrads aufweist, wobei der von diesen Einblasmitteln austretende Luftstrom in Drehrichtung des Laufrads gerichtet ist, wobei die Einblasmittel von dem zweiten ringförmigen Blech (84) und/oder von dem ringförmigen Flansch (28) des Diffusors abgestützt werden.

11. Turbomaschine, **dadurch gekennzeichnet, dass** sie eine Lüftungseinrichtung nach einem der vorangehenden Ansprüche aufweist.
